# EUROPEAN PATENT APPLICATION

(11) **EP 1 103 372 A2**
(43) Date of publication of application: **30.05.2001**
(21) Application number: 00125250.1
(22) Date of filing: 23.11.2000
(51) Int. Cl.: B32B 31/20, B42C 9/00

(54) **Laminator having binding function**

(30) Priority: 23.11.1999 KR 9952253; 23.11.1999 KR 9952254
(71) Applicant: Lee, Young-Jae, Kumcheon-ku, Seoul (KR)
(72) Inventor: Lee, Young-Jae, Kumcheon-ku, Seoul (KR)
(74) Representative: Patentanwälte Hauck, Graalfs, Wehnert, Döring, Siemons

(57) **Abstract**

The present invention relates to the laminator having binding function, and provides the means (11) which can bind an article with the waste heat generated under coating work on the body of the laminator to use more effectively the waste heat generated from the laminator of conventional technique. By using the laminator according to the present invention, it is possible to do coating work and binding work simultaneously, enhance the functionality of the laminator, make use of the heat efficiently, and enhance the efficiency of the work related to the coating work and the binding work.

## Description

### Field of the Invention

The present invention relates to the laminator having binding function, and more particularly, to the laminator having binding function which enhance the functionality of the laminator by using efficiently the waste heat generated from the laminator as a heat source required for binding.

### Background of the Invention

Generally, a laminator is a machine that coats a paper with a film by applying heat.

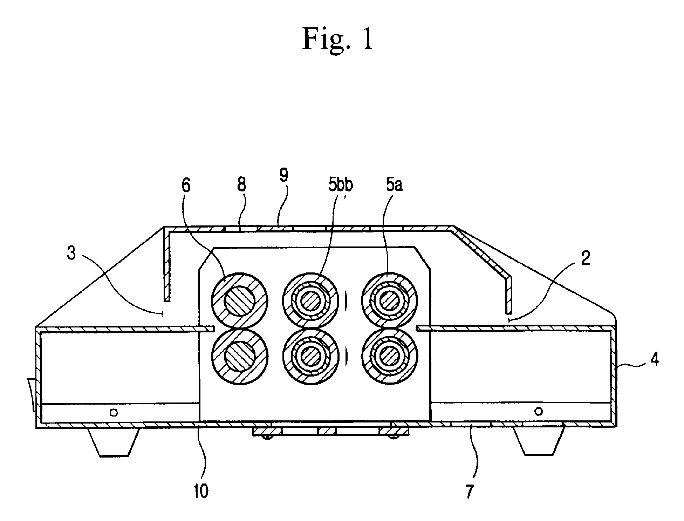

Such laminator comprises a body 4 provided with an inlet 2 at one part and an outlet 3 at the opposite, and front and rear at least two pairs of heating rollers 5a, 5b and a pair of pressure rollers 6 arranged in a line between the inlet 2 and the outlet 3 within the body 4 as shown by FIG. 1.

Since the heating rollers 5a, 5b and the pressure rollers 6 can adjust the distance between rollers in the upper and lower sides, it is possible to coat with a variety of thickness.

In the body 4 of the laminator, a plurality of air suction holes 7 and heat discharging holes 8 are formed in an upper plate 9 and a lower plate 10, respectively, to emit the heat outside which is generated from the heating rollers 5a, 5b.

The coating work using the laminator mentioned above will be described.

First, the power is on and the heat of the heating rollers 5a, 5b is increased by handling a switch. Next, a film and a paper is inserted to the inlet 2, which is moving by the rotation of the heating rollers 5a, 5b, the film is melting to stick to the paper by the heat. Subsequently, the film and the paper is pressed by the pressure rollers 6, and then discharged through the outlet 3. Thus the coating work is over.

However, because the laminator is based on the principle of generating considerably lots of heat for coating work in a short time, there is inefficient aspect that the waste heat is larger than the actually used heat for the coating work.

### Summary of the Invention

Therefore, the present invention is designed to use effectively the waste heat generated from the laminator of conventional technique, and an objective of the invention is to provide a laminator having binding function which can enhance not only the efficiency of the work related to coating work and binding work, and the practical use of heat, but also the functionality of the laminator by providing the means to be able to bind with the waste heat generated from the coating work on the body of the laminator, and by performing the coating work and the binding work simultaneously.

Hereinafter, the several embodiments of the laminator having binding function according to the present invention will be described refering to the drawings annexed.

The present invention provides that a laminator having binding function include a body 4 provided with an inlet 2 at one part and an outlet 3 at the opposite, front and rear at least two pairs of heating rollers 5a, 5b and a pair of pressure rollers 6 arranged in a line between the inlet 2 and the outlet 3 within the body 4, and an upper plate 9 and a lower plate 10 of the body 4 having air suction holes 7 and heat discharging holes 8, characterized in that the laminator comprises the means which is formed on the upper plate 9 of the body 4 and makes it possible to bind with the heat provided near the heating rollers 5a, 5b.

In particular, the means making it possible to bind comprise a binding groove 11 that is formed just on the heating rollers 5a, 5b in a line with them.

Also, a plurality of heat transfer holes 12a that are arranged at regular intervals and are able to receive the heat directly, are formed in the bottom of the binding groove 11.

In addition, heat collection plates 13a prepared by cutting directly a bottom plate and then folding it are extended perpendicularly in one side of the edge of each of the heat transfer holes 12a which is formed in the bottom of the binding groove 11.

Moreover, the means making it possible to bind is installed long at one side of the inside of the upper plate 9 constituting the body 4 and comprises a heating plate 15 equipped with a heating element 14.

Also, a guide plate 17 that is attachable or detachable by both supporting fragments 16a in the surface of a wall is provided in the binding groove 11.

Furthermore, the means making it possible to bind is installed in a line with the heating rollers 5a, 5b by using the heat discharging holes 8 in the upper plate 9 of the body 4 and comprises a binding frame 18 having a plurality of heat transfer holes 12b at bottom.

Also, heat collection plates 13b prepared by cutting directly a bottom plate and then folding it are extended perpendicularly in one side of the edge of each of the heat transfer holes 12b formed in the bottom of the binding frame 18.

In addition, a guide plate 17 that is attachable or detachable by both supporting fragments 16b in the surface of a wall is provided in the binding frame 18.

### Brief Description of the Drawing

FIG. 1 is a schematic lateral sectional view illustrating the laminator of conventional technique.

FIG. 2 is an exploded perspective view illustrating one embodiment of the laminator having binding function according to the present invention.

FIG. 3 is a perspective view showing the connected state according to the embodiment of FIG. 2.

FIG. 4 is a lateral sectional view illustrating another embodiment of the laminator having binding function according to the present invention.

FIG. 5 is an enlarged perspective view of the essential part according to the embodiment of FIG. 4.

FIG. 6 is an enlarged lateral sectional view of the essential part illustrating the using condition according to the embodiment of FIG. 4.

FIG. 7 is an enlarged perspective view of the essential part illustrating another embodiment of the laminator having binding function according to the present invention.

FIG. 8 is a lateral sectional view according to the embodiment of FIG. 7.

FIG. 9 is an enlarged lateral sectional view of the essential part illustrating the using condition according to the embodiment of FIG. 7.

FIG. 10 is an exploded perspective view illustrating another embodiment of the laminator having binding function according to the present invention.

FIG. 11 is a front sectional view according to the embodiment of FIG. 10.

FIG. 12 is an exploded perspective view illustrating another embodiment of the laminator having binding function according to the present invention.

FIG. 13 is a lateral sectional view according to the embodiment of FIG. 12.

FIG. 14 is a front sectional view according to the embodiment of FIG. 12.

FIG. 15 is an enlarged lateral sectional view of the essential part illustrating the using condition according to the embodiment of FIG. 12.

FIG. 16 is a lateral sectional view illustrating another embodiment of the laminator having binding function according to the present invention.

### Detailed Description of the Invention

The present invention is now described with reference to embodiments. However, it should be noted that these embodiments are intended to be illustrative in nature only, and are not intended to limit or restrict the scope of this invention in any way.

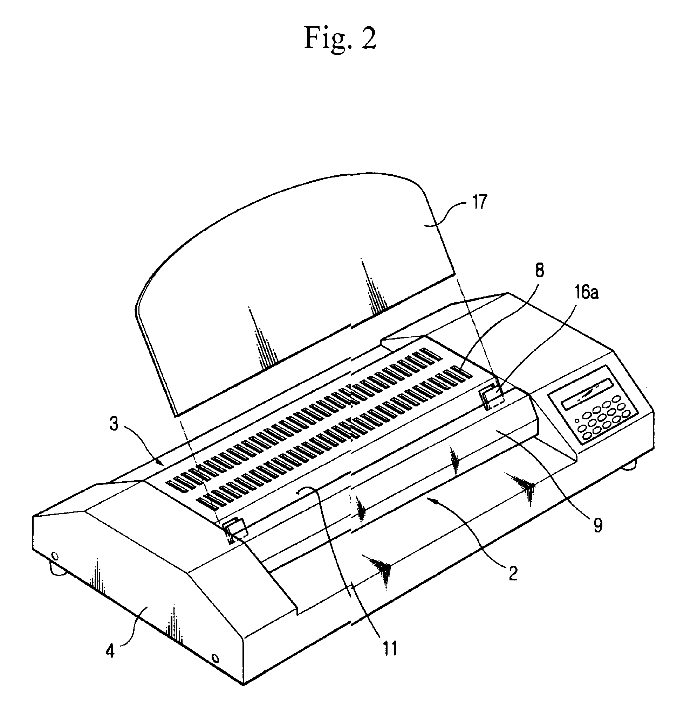

FIG. 2 is an exploded perspective view illustrating one embodiment of the laminator having binding function according to the present invention.

The binding groove 11 is formed in a line along the transverse direction of the body 4, as a means to be able to bind in the upper plate 9 constituting the body 4 of the laminator, and a portion of the bottom part of the guide plate 17 to support an article is inserted into the inside of the binding groove 11.

The binding groove 11 has a long rectangular groove having desired width and depth, which is formed in a line near the heating rollers 5a, 5b which is located in the just front of the inlet 2 within the body 4, and the guide plate 17 is installed with the structure of attachable or detachable slide at both supporting fragments 16a made by cutting directly the surface of a wall of the binding groove 11 and then folding it.

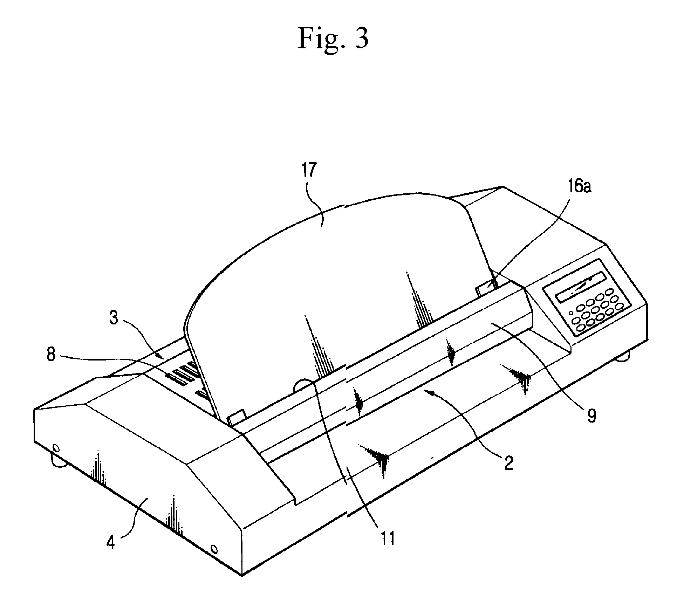

FIG. 3 is a perspective view showing the connected state according to the embodiment of FIG. 2.

FIG. 3 shows the state of installation by inserting the guide plate 17 into the binding groove 11 with a slight slope. Such guide plate 17 can secure sufficient area to hold the article upwardly.

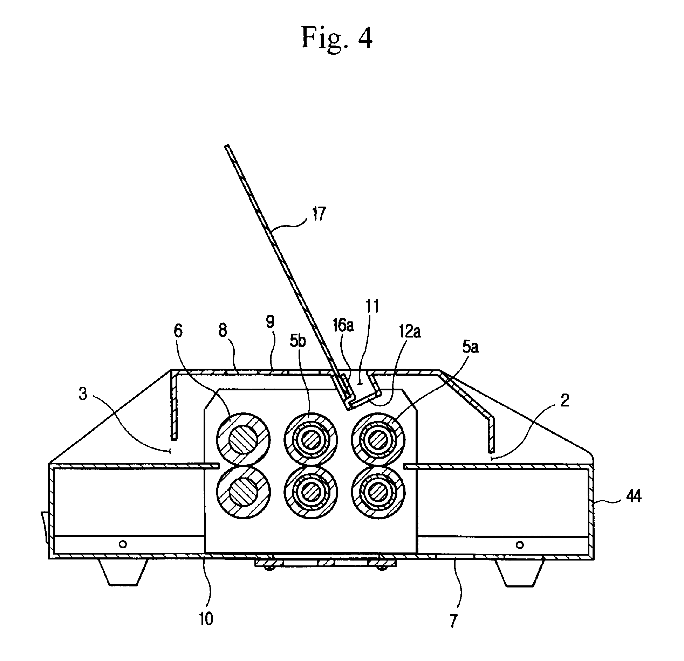

FIG. 4 is a lateral sectional view illustrating another embodiment of the laminator having binding function according to the present invention.

The inlet 2 and the outlet 3 are arranged at both sides of the body 4, and front and rear two pairs of heating rollers 5a, 5b and a pair of pressure rollers 6 are arranged in a line between the inlet 2 and the outlet 3 within the body 4. Air suction holes 7 and heat discharging holes 8 are formed in the upper plate 9 and the lower plate 10, respectively.

The binding groove 11 formed by hollowing the upper plate 9 just on the heating roller 5a, which is positioned to a maximum degree near the heating roller 5a, and heat transfer holes 12a are formed in the bottom of the binding groove 11 to receive directly the heat emitted from the heating rollers 5a, 5b as much as possible.

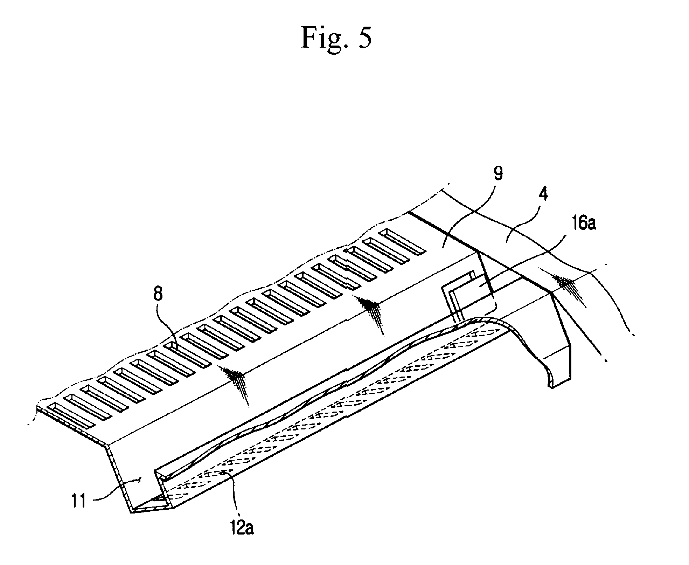

A plurality of heat transfer holes 12a are formed at regular intervals along the direction of the length of the binding groove 11 as shown by FIG. 5. Preferably, the bottom plate of the binding groove 11 may be punched to make the heat transfer holes 12a that transfer sufficiently the heat from the heating rollers 5a, 5b, except for leaving the part in the middle that can hold an article.

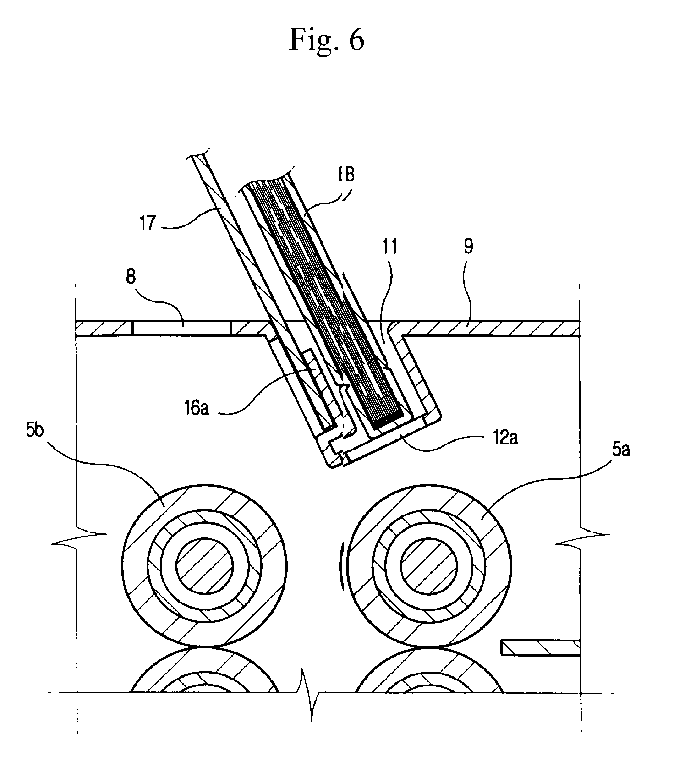

FIG. 6 is an enlarged lateral sectional view of the essential part illustrating the using condition according to the embodiment of FIG. 4.

In the state of operating the heating rollers 5a, 5b for coating work, the guide plate 17 is installed by insertion to the inner surface of the binding groove 11. After an article B is inserted into the binding groove 11 by using the guide plate 17, as desired times go by, a glue applied between a cover sheet and an inside sheet of the article B is melting to stick the cover sheet and the inside sheet of the article B together by the heat emitted from the heating rollers 5a, 5b, and thus the coating work can be finished.

At this time, binding work may be performed together while the coating work is being performed, and if necessary, the binding work may be performed alone.

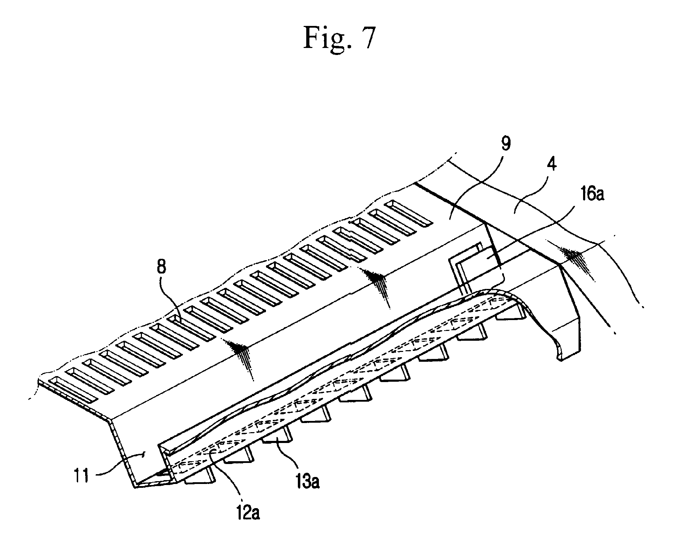

FIG. 7 is an enlarged perspective view of the essential part illustrating another embodiment of the laminator having binding function according to the present invention.

In this embodiment of FIG. 7, the means to receive more effectively the heat emitted from the heating rollers 5a, 5b is provided.

To provide the above means, heat collection plates 13a extended to near the heating roller 5a are formed in one side of the edge of each of the heat transfer holes 12a which is formed in the bottom of the binding groove 11.

Preferably, the heat collection plates 13a are prepared by cutting the bottom plate of the binding groove 11 to form the heat transfer holes 12a and folding it perpendicularly downwardly.

Such heat collection plates 13a may be positioned close to the degree of almost reaching the heating roller 5a so that almost all the heat emitted from the heating rollers 5a, 5b can be absorbed and transferred to the binding groove 11. Thus the present invention is most effective in terms of using the waste heat discarded from the heating rollers 5a, 5b.

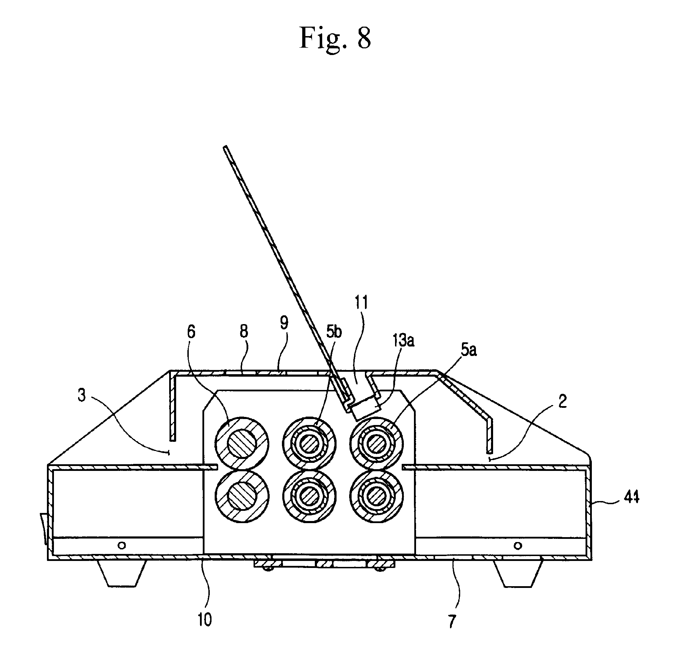

FIG. 8 is a lateral sectional view according to the embodiment of FIG. 7.

The inlet 2 and the outlet 3 are arranged at both sides of the body 4, and front and rear two pairs of heating rollers 5a, 5b and a pair of pressure rollers 6 are arranged in a line between the inlet 2 and the outlet 3 within the body 4, and air suction holes 7 and heat discharging holes 8 are formed in the upper plate 9 and the lower plate 10, respectively.

FIG. 8 shows the state that the heat collection plates 13a are extended from the bottom of the binding groove 11 which is located just on the heating roller 5a, which are contact to the heating roller 5a.

With such heat collection plates 13a, the effect that the heat emitted from the heating rollers 5a, 5b transfers directly to the binding groove 11 can be expected.

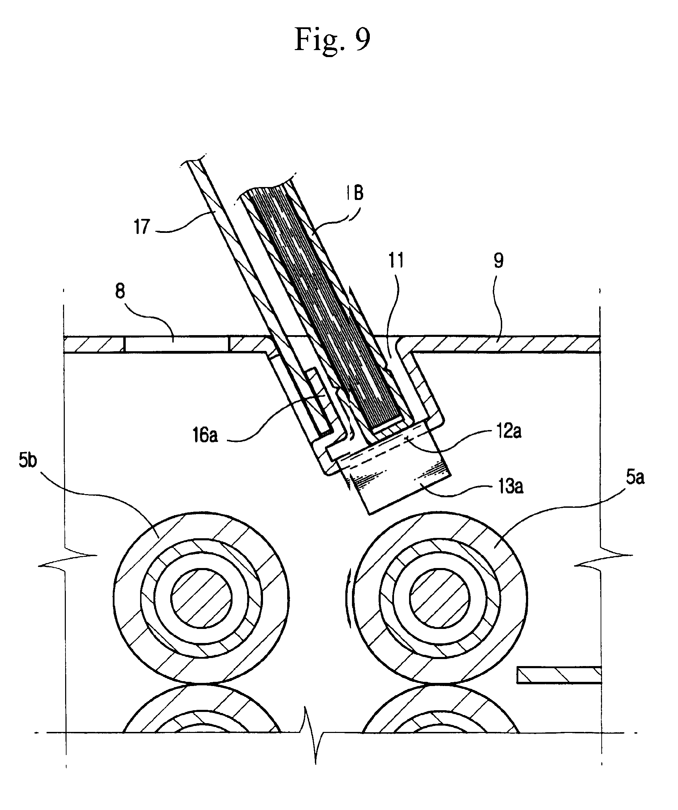

FIG. 9 is an enlarged lateral sectional view of the essential part illustrating the using condition according to the embodiment of FIG. 7.

The explanation for operation is identical to the above embodiment. The heat generated from the heating roller 5a can be transferred more effectively to the binding groove 11, since the heat collection plates 13a are extended to the heating roller 5a almost in contact.

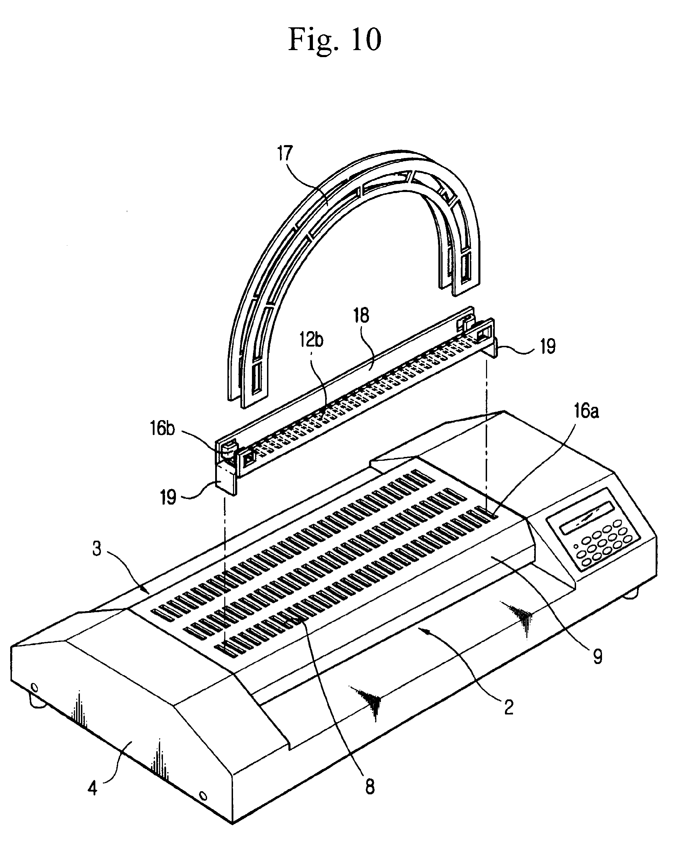

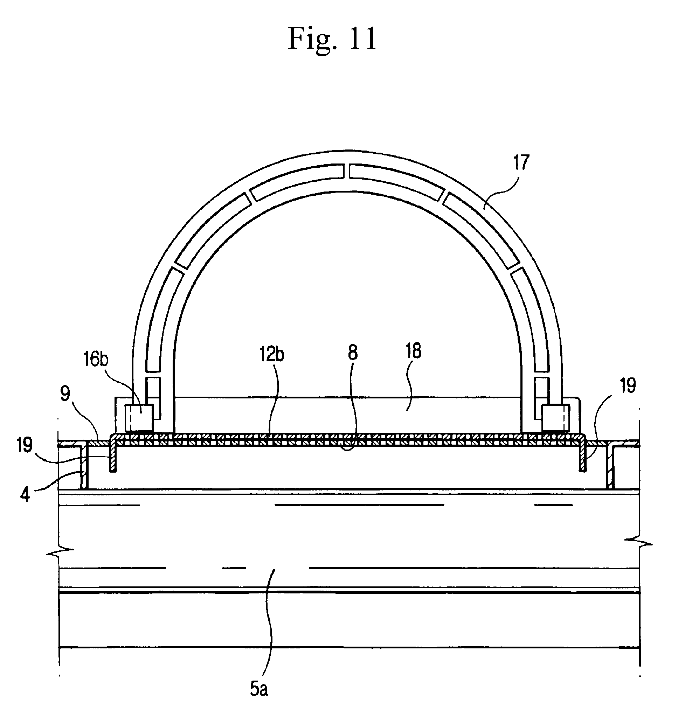

FIG. 10 is an exploded perspective view illustrating another embodiment of the laminator having binding function according to the present invention, and FIG. 11 is a front sectional view according to the embodiment of FIG. 10.

In the upper plate 9 constituting the body 4 of the laminator, a binding frame 18 is placed in contact on the heat discharging holes 8 which is formed on the upper plate 9 of the body 4 as a means to be able to bind, and a portion of the bottom of the guide plate 17 which can hold an article is inserted to the inside of the binding frame 18.

The binding frame 18 has a shape of long rectangular frame having walls front and rear and a bottom plate. Supporting bodies 19 are formed by folding perpendicularly in both edges of the bottom plate with which the binding frame 18 can be secured to the heat discharging holes 8.

A plurality of heat transfer holes 12b is formed at regular intervals in the bottom of the binding frame 18. It is preferred to increase the number of the heat transfer holes 12b or form large enough hardly to leave the bottom to receive the heat emitted through the heat discharging holes 8 to a maximum degree.

At this time, the binding frame 18 is also positioned in a line right on the heating roller 5a, and the guide plate 17 is installed with the structure of attachable or detachable slide at both supporting fragments 16a made by cutting directly the surface of a wall of the binding groove 11 and then folding it.

In particular, unlike the above-described binding groove 11, the binding frame 18 is installed horizontally, so that the article B can be inserted vertically. Thus it is preferred to have two guide plates 17 for supporting both sides of the article B.

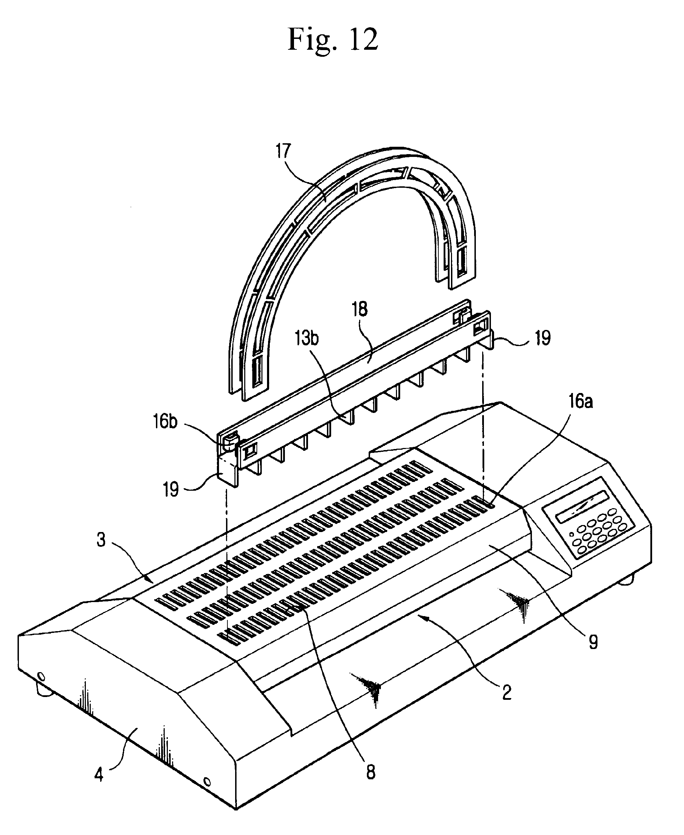

FIG. 12 is an exploded perspective view illustrating another embodiment of the laminator having binding function according to the present invention.

FIG. 12 shows that the heat collection plates 13b are formed at edges of the heat transfer holes 12b which are formed at the bottom of the binding frame 18.

Like the above described collection plates 13a in the binding groove 11, preferably, the heat collection plates 13b are prepared by cutting the bottom plate of the binding frame 18 to form the heat transfer holes 12b and folding it perpendicularly downwardly. And the number of the formed heat collection plates 13b may be identical to the number of each hole or may be appropriate on the ground of the number of holes.

Such heat collection plates 13b may be positioned almost in contact near the heating roller 5a, which are inserted to the inside of the body 4 through the heat discharging holes 8 of the upper plate 9, so that almost all the heat emitted from the heating roller 5a can be absorbed and transferred to the binding groove 11.

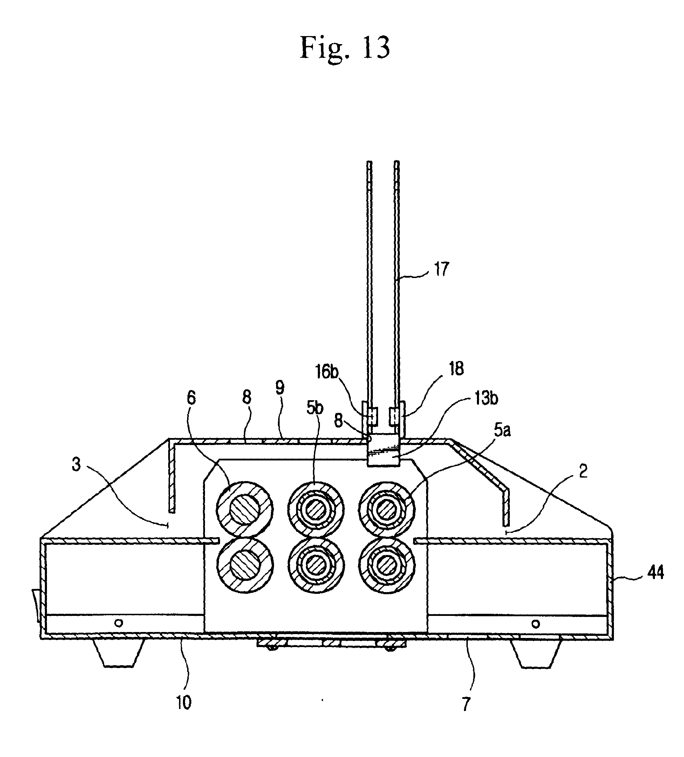

FIG. 13 is a lateral sectional view according to the embodiment of FIG. 12.

The inlet 2 and the outlet 3 are arranged at both sides of the body 4, and front and rear two pairs of heating rollers 5a, 5b and a pair of pressure rollers 6 are arranged in a line between the inlet 2 and the outlet 3 within the body 4, and air suction holes 7 and heat discharging holes 8 are formed in the upper plate 9 and the lower plate 10, respectively.

The binding frame 18 is placed on the upper plate 9 positioned right on the heating roller 5a, and the heat collection plates 13b extended from the bottom of the binding frame 18 are positioned almost in contact near the heating roller 5a through the heat discharging holes 8 of the upper plate 9.

Since the edge of the heat collection plates 13b are positioned near the heating roller 5a, the heat emitted from the heating rollers 5a, 5b can be transferred directly to the biding frame 18.

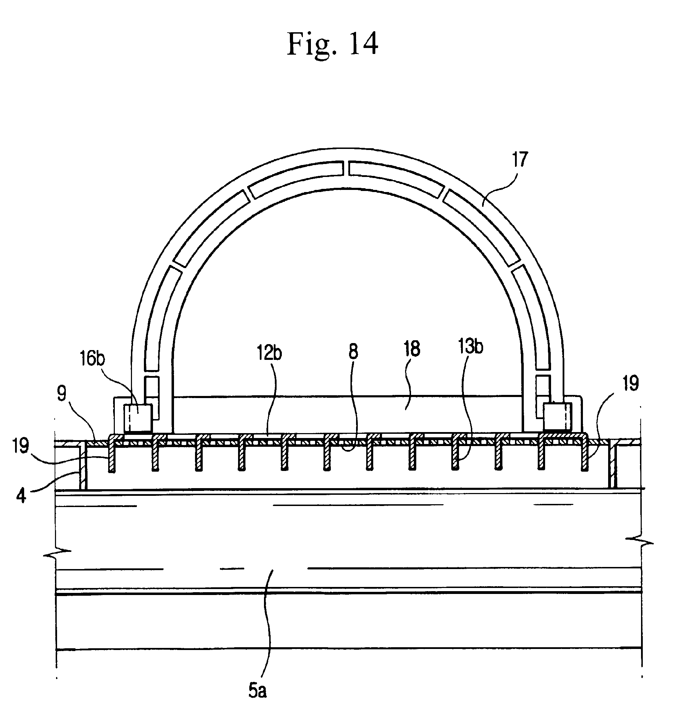

FIG. 14 is a front sectional view according to the embodiment of FIG. 12.

FIG. 14 shows that the binding frame 18 is installed in a line along the whole length of the heating roller 5a, and also an appropriate number of the heat collection plates 13b are positioned near the heating roller 5a, so that almost all the heat emitted from the heating rollers 5a, 5b can be transferred.

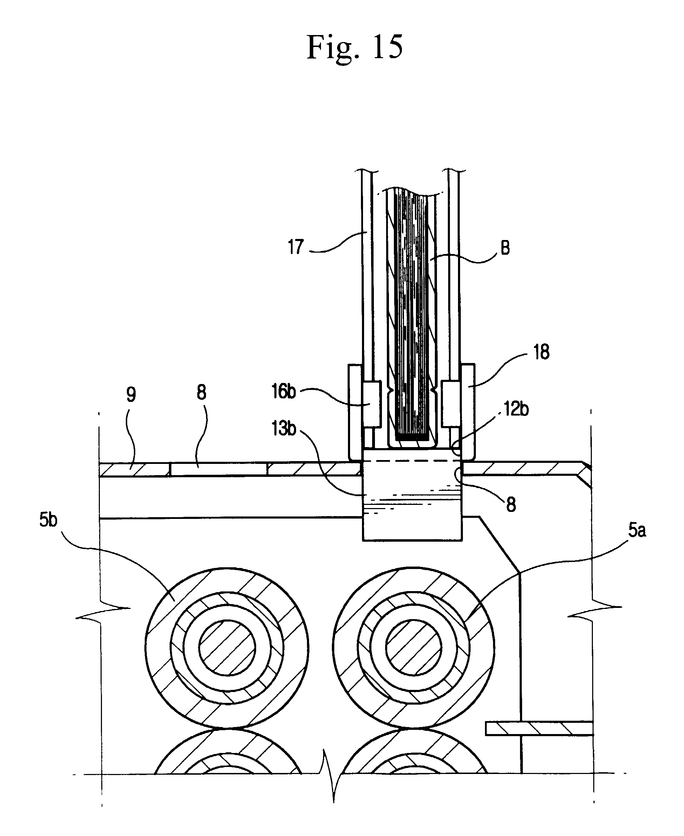

FIG. 15 is an enlarged lateral sectional view of the essential part illustrating the using condition according to the embodiment of FIG. 12.

In the state of operating the heating rollers 5a, 5b for coating work, the binding frame 18 is installed on the upper plate 9 of the body 4, and then the guide plate 17 is installed by being inserted to the inside of the binding frame 18. After the article B is reached safely within the binding frame 18 using the guide plate 17, as desired times go by, a glue applied between a cover sheet and an inside sheet of the article B is melting to stick the cover sheet and the inside sheet of the article B together by the heat emitted from the heating rollers 5a, 5b, and thus binding work is over.

In addition, the binding work may be performed together while coating work is being performed, and if necessary, the binding work may be performed alone.

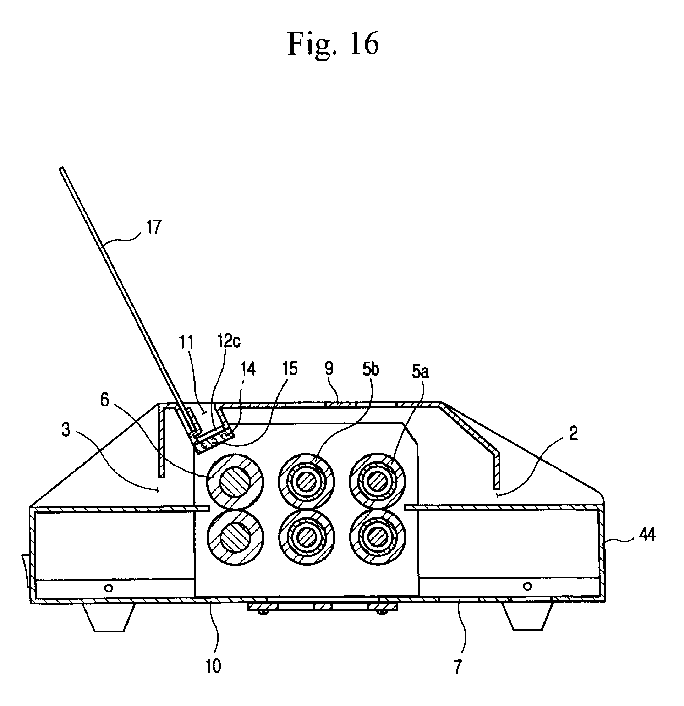

FIG. 16 is a lateral sectional view illustrating another embodiment of the laminator having binding function according to the present invention.

In the upper plate 9 constituting the body 4 of the laminator, the binding groove 11 having a plurality of the heat transfer holes 12c is formed in the area that the heat emitted from the heating rollers 5a, 5b cannot reach, i.e., the upper plate at the top of the pressure roller 6, and a heating plate 15 equipped with a heating element 14 is installed at the bottom of the binding groove 11 as a means to be able to bind.

The heating plate 15 generates heat independently and the heat generated from the heating plate 15 is transferred to the binding groove 11 through the heat transfer holes 12c. Once an article B is placed in the binding groove 11, binding work can be done easily.

As mentioned above, the present invention makes it possible to do binding work as well as coating work by using the generated heat under coating work with the laminator, so that the functionality of the laminator can be enhanced. Also, using the waste heat discarded in conventional techniques can increase thermal efficiency, and the efficiency of the work can be enhanced since coating work and binding work may be performed simultaneously or selectively.

## Claims

1. A laminator having binding function include a body 4 provided with an inlet 2 at one part and an outlet 3 at the opposite, front and rear at least two pairs of heating rollers 5a, 5b and a pair of pressure rollers 6 arranged in a line between the inlet 2 and the outlet 3 within the body 4, and an upper plate 9 and a lower plate 10 of the body 4 having air suction holes 7 and heat discharging holes 8, characterized in that the laminator comprises the means which is formed on the upper plate 9 of the body 4 and makes it possible to bind with the heat provided near the heating rollers 5a, 5b.

2. A laminator of claim 1, wherein the means making it possible to bind comprises a binding groove 11 which is formed right on the heating rollers 5a, 5b in a line with them.

3. A laminator of claim 2, wherein a plurality of heat transfer holes 12a which are arranged at regular intervals and are able to receive the heat directly, are formed in the bottom of the binding groove 11.

4. A laminator of claim 3, wherein heat collection plates 13a prepared by cutting directly a bottom plate and then folding it are extended perpendicularly in one side of the edge of each of the heat transfer holes 12a which are formed in the bottom of the binding groove 11.

5. A laminator of claim 1, wherein the means making it possible to bind forms the binding groove 11 having a plurality of the heat transfer holes 12c in the upper plate 9 at the top of the pressure roller 6, and comprises a heating plate 15 equipped with a heating element 14 which is installed at the bottom of the binding groove 11.

6. A laminator according to any one of claim 2 to 4, wherein a guide plate 17 which is attachable or detachable by both supporting fragments 16a in the surface of a wall, is provided in the binding groove 11.

7. A laminator of claim 1, wherein the means making it possible to bind is installed in a line with the heating rollers 5a, 5b by using the heat discharging holes 8 in the upper plate 9 of the body 4 and comprises a binding frame 18 having a plurality of heat transfer holes 12b at bottom.

8. A laminator of claim 7, wherein heat collection plates 13b prepared by cutting directly a bottom plate and then folding it are extended perpendicularly in one side of the edge of each of the heat transfer holes 12b which are formed in the bottom of the binding frame 18.

9. A laminator of claim 7 or 8, wherein a guide plate 17 which is attachable or detachable by both supporting fragments 16b in the surface of a wall, is provided in the binding frame 18.
